# EUROPEAN PATENT APPLICATION

(11) **EP 1 435 562 A2**
(43) Date of publication of application: **07.07.2004**
(21) Application number: 03028124.0
(22) Date of filing: 05.12.2003
(51) Int. Cl.: G06F 3/033

(54) **Interaction model**

(30) Priority: 03.01.2003 US 336632
(71) Applicant: MICROSOFT CORPORATION, Redmond, WA 98052 (US)
(72) Inventor: Howard, Dane M., Sammamish Washington 98074 (US); Tan, Albert W., Redmond Washington 98052 (US); Thompson, R. Donald III, Mercer Island Washington 98040 (US)
(74) Representative: Grünecker, Kinkeldey, Stockmair & Schwanhäusser Anwaltssozietät

(57) **Abstract**

An apparatus and method are related to navigating through content on a device that includes stored information that is organized according to channels. Content that is associated with the channels is selected and viewed on a display of the device using at least four selectors. The selectors are mapped to specific functions based on an operating state, mode, or view of the device. The device includes a current operating state that may correspond to a channel splash, a channel view, an extended view, and a mode splash operating state. Selectors have consistent interaction in the device for the channel splash and mode splash operating states, while certain selectors are mapped to context specific functions for the other operating states. The context specific functionality allows great flexibility in the behavior of the device.

## Description

### Field of the Invention

The present invention relates generally to user interfaces. More particularly, the present invention relates to a system and method for navigating though information using an interaction model.

### Background of the Invention

As society becomes increasingly mobile, mobile electronic devices are enjoying a tidal wave of popularity and growth. Cell phones, wireless PDAs, wireless laptops and other mobile communication devices are making impressive inroads with mainstream customers. Some types of mobile electronic devices are processor-controlled, with a user interface to allow the user to more easily and intuitively operate the device. For example, some mobile telephones include a display unit that displays graphical data to support email, web browser, and other non-voice features. Manufacturer of mobile electronic devices often utilize buttons on the mobile electronic device to navigate through various menus and display the graphical data.

### Summary of the Invention

An apparatus and method are related to navigating through content on a device. An example device is a watch device that includes stored information that is organized according to channels. Content that is associated with the channels is selected and viewed on a display of the device. Example display types include LCD type displays (both active and passive), CRT type displays, projection screen displays (both rear projection and front projection), illuminated displays such as back-lit and front-lit, and any other device that provides projection of a display image that is viewable by a user. The device includes at least four selectors that are arranged to provide navigation functions in accordance with the method. The selectors are mapped to specific functions based on an operating state, mode, or view on the device. The device includes a current operating state that may correspond to a channel splash, a channel view, an extended view, and a mode splash operating state. Selectors have consistent interaction in the device for the channel splash and mode splash operating states, while certain selectors are mapped to context specific functions for the other operating states. The context specific functionality allows great flexibility in the behavior of the device. Extended navigation functions may be assigned to the selectors based on the currently selected channel. Extended navigation functions are selected by activating the corresponding selectors for a predetermined time interval.

A more complete appreciation of the present invention and its improvements can be obtained by reference to the accompanying drawings, which are briefly summarized below, to the following detailed description of illustrative embodiments of the invention, and to the appended claims.

### Brief Description of the Drawings

FIGURE 1 is a diagram illustrating an operating environment;
FIGURE 2 is a schematic diagram of an example electronic device;
FIGURE 3 is a diagram that illustrates an example watch device that includes an example user interface;
FIGURE 4 is a diagram that illustrates another example watch device that includes another example user interface;
FIGURE 5 is a diagram that illustrates still another example watch device that includes still another example user interface;
FIGURE 6A - 6C illustrate process flow diagrams for example navigation function of an electronic device;
FIGURE 7 is a diagram that illustrates example navigation functions for an example electronic device; and
FIGURES 8 and 9 are illustrations of example display screens from an example electronic device, arranged in accordance with the present invention.

### Detailed Description of the Preferred Embodiment

The present invention is described in the context of an interaction model for an electronic device. In many of the described embodiments, the electronic device is a watch type device that is specially configured to receive communication signals. The electronic devices may be configured to receive broadcast transmission from one or more broadcast towers. The electronic devices may be capable of receiving and processing messages from the broadcast transmissions. After information is received and processed by the client device, a user may either passively or actively review the information that is stored in the electronic device. The user interface for the client device employs an interaction model as will be described in further detail below. As will become apparent from a reading of the following detailed description, receipt of broadcast transmissions is not necessary for the interaction model. Instead, any device that includes stored content may be arranged to operate according to the described interaction model.

Although described here in the context of a watch-based system, it will be apparent that the teachings of the application have equal applicability to any other mobile or non-mobile devices, such as portable and desktop computers, personal digital assistants (PDAs), cellular telephones, alarm clocks, key-chains, refrigerator magnets, wall clocks, and the like. The use of a watch is for illustrative purposes only to simplify the following discussion, and may be used interchangeably with "mobile device" or "electronic device".

"Computer readable media" can be any available media that can be accessed by client/server devices. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by client/server devices. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above are included within the scope of computer readable media.

The term "content" can be any information that may be stored in an electronic device. By way of example, and not limitation, content may comprise graphical information, textual information, and any combination of graphical and textual information. Content may be displayable information and/or auditory information. Auditory information consists of one or more sounds. The term "sound" can be any combination of single sounds, streams of sound, a repetition of single sounds and/or streams of sound. Content may also include other types of user receivable information such as activation and/or deactivation of the illumination on a display (e.g., a back-lit display), and activation of a vibration effect in the device.

The term "display" can be any device that is arranged to provide viewing of graphical and/or textual information. Example display types include LCD type displays (both active and passive), CRT type displays, projection screen displays (both rear projection and front projection), illuminated displays such as back-lit and front-lit, as well as others.

An example device includes stored information that is organized according to channels. Content that is associated with the channels is selected and viewed on a display of the device using selectors (e.g., four selectors). The selectors are mapped to specific functions based on an operating state, mode, or view of the device. The device includes a current operating state that may correspond to a channel splash, a channel view, an extended view, and a mode splash operating state. Selectors have consistent interaction in the device for the channel splash and mode splash operating states, while certain selectors are mapped to context specific functions for the other operating states. The context specific functionality allows great flexibility in the behavior of the device.

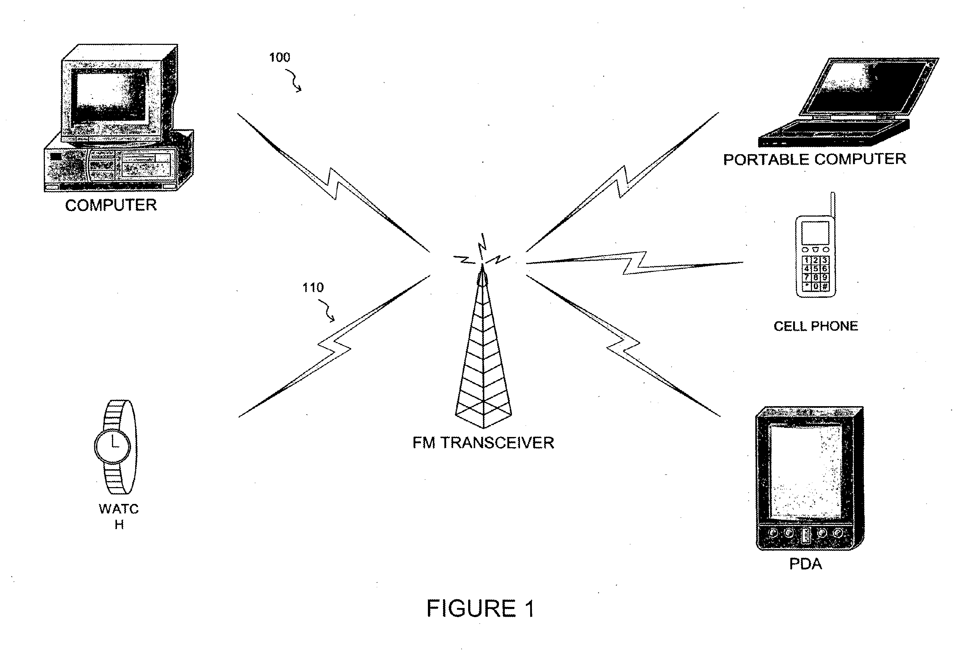

The overall operating environment for the interaction model will be discussed as follows below with reference to FIGURES 1 - 2. Although the examples described-below include details for a wireless communication system, the interaction model is not so limited. The interaction model applies to navigation and related functions for any device that has stored content.

### Operating Environment

FIGURE 1 illustrates an example operating environment (100) for the interaction model. As illustrated in the figure, an FM transceiver or broadcast is transmitted over a communication channel (110) to various electronic devices. Example electronic devices that have an FM receiver or transceiver may include a desktop computer, a watch, a portable computer, a wireless cellular telephone (cell phone), and a personal data assistant (PDA). The electronic devices are arranged to receive information from the FM broadcast. The FM broadcast may be of any number of types including but not limited to: a standard FM transmission, a subcarrier FM transmission, or any other type of FM transmission as may be desired.

Example electronic devices that may include an electronic system that is arranged to operate according to the interaction model are illustrated in FIGURE 1. The electronic system may employ a wireless interface such as the FM transmission systems that are described above. Each of the electronic systems receives messages/information over the communication channel.

Each broadcast transmission corresponds to the transmission of one or more frames. Each frame may include multiple messages, where some messages are public broadcast (aka "global" or "shared" messages), while other messages are client specific messages (aka "personal" or "private" messages). Every client that is located within the designated service region may receive shared messages, while a single client may decode a private message.

Electronic devices (e.g., a wireless watch device) receive message packets according to shared and private messages that are directed to the client device. Message packets are organized in groups according to logical slot (or channel) entry numbers. For example, a particular electronic device is configured to receive a selected group of channels from the available channels. The message packets associated with each of those channels is received, processed, and stored in the client device. The stored message packets can be reviewed using a user interface that employs an interaction model, as described in further detail herein.

Example channels include: a time channel, a messages channel, a contact channel, a calendar channel, a weather channel, a stocks channel, a news channel, and a games channel. Messages associated with each channel include message content that is based on the particulars of the channel. For example, the weather channel may include the current weather in a local region, the current weather in a national region, and the current weather in an international region. In this example, each of the weather reports can be selected and reviewed by selecting the weather channel on the electronic device.

### Illustrative Electronic System

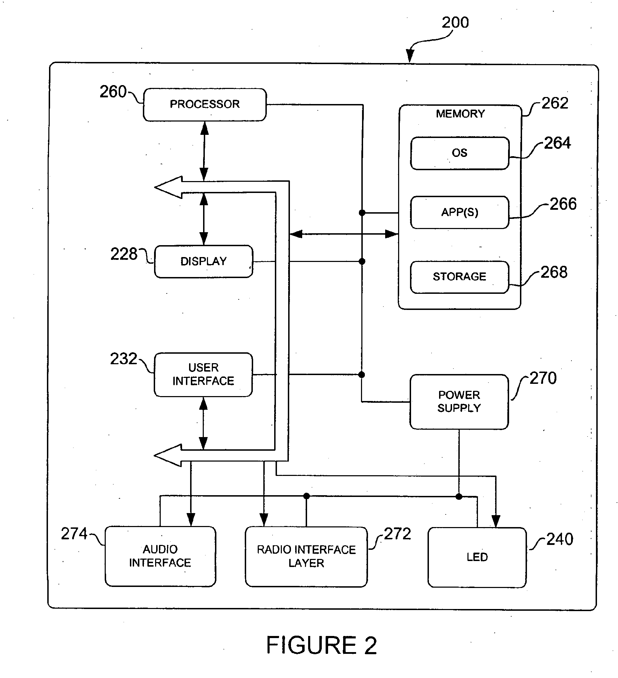

FIGURE 2 is a schematic diagram illustrating functional components of an electronic device (200). The electronic device (200) has a processor (260), a memory (262), a display (228), and a user interface (232). The memory (262) generally includes both volatile memory (e.g., RAM) and non-volatile memory (e.g., ROM, Flash Memory, or the like). The electronic device (200) includes an operating system (264), such as the Windows CE operating system from Microsoft Corporation or another operating system, which is resident in the memory (262) and executes on the processor (260). The user interface (232) may be a series of push buttons, a scroll wheel, a numeric dialing pad (such as on a typical telephone), or another type of user interface means. The display (228) may be a liquid crystal display, or any other type of display as,previously described. In one example, the display (228) may be touch-sensitive that would act as an input device.

One or more application programs (266) are loaded into memory (262) and run on the operating system (264). Examples of application programs include phone dialer programs, email programs, scheduling/calendaring programs, PIM (personal information management) programs, Internet browser programs, and so forth. The electronic device (200) also includes a non-volatile storage (268) that is located within the memory (262). The non-volatile storage (268) may be used to store persistent information which should not be lost if the electronic device (200) is powered down. The applications (266) may use and store information in the storage (268), such as e-mail or other messages used by an e-mail application, contact information used by a PIM, appointment information used by a scheduling program, documents used by a word processing application, instant messages for an instant messaging application, text messages in a text messaging application, and the like.

The electronic device (200) has a power supply (270), which may be implemented as one or more batteries. The power supply (270) might further include an external power source, such as an AC adapter or a powered docking cradle that supplements or recharges the batteries.

The electronic device (200) is also shown with two types of external notification mechanisms: an LED (240) and an audio interface (274). These devices may be directly coupled to the power supply (270) so that when activated, they remain on for a duration dictated by the notification mechanism even though the processor (260) and other components might shut down to conserve battery power. The LED (240) may be programmed to remain on indefinitely until the user takes action to indicate the powered-on status of the device. The audio interface (274) is used to provide audible signals to and receive audible signals from the user. For example, the audio interface (274) may be coupled to a speaker for providing audible output and to a microphone for receiving audible input, such as to facilitate a telephone conversation, or as a user interface using voice recognition.

The electronic device (200) may also include a radio interface layer (272) that performs the function of receiving and/or transmitting radio frequency communications. The radio interface layer (272) facilitates wireless connectivity between the electronic device (200) and the outside world, via a communications carrier or service provider. Transmissions to and from the radio interface layer (272) are conducted under control of the operating system (264). In other words, communications received by the radio interface layer (272) may be disseminated to application programs (266) via the operating system (264), and vice versa.

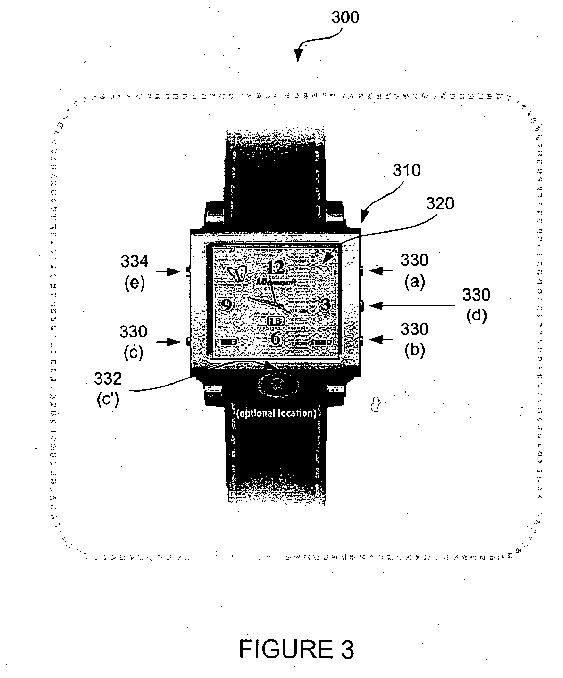

Electronic device 200 may be a mobile electronic device such as a watch device that includes a wireless interface. Example user interfaces for a watch device are shown in FIGURE 3, FIGURE 4, and FIGURE 5, as will be described below. Although the below-described user interface configurations include multiple selector buttons (e.g., four selector buttons), the functions of many of the selector buttons may be combined by a single selector (e.g., a button, a rocket switch, a wheel, etc.).

### Example User Interfaces (UI)

FIGURE 3 illustrates an example watch device (300) that includes a user interface to an electronic system that is configured to operate in accordance with described interaction model. The watch device (300) includes a bezel (310), which has an electronic system (e.g., see FIGURE 2). The electronic system performs the functions in a manner that is consistent with the hardware that was previously described with respect to FIGURE 2. The bezel (310) has a display (320) such as a liquid crystal display. In one embodiment, watch hands are electronically generated on the display (320). In an alternative embodiment, the bezel includes analog-type watch hands that do not detrimentally interfere with the display (320). The watch device (300) includes a series of buttons (330) that are arranged to operate as a user interface (UI).

Each of the buttons operates as a selector in the user interface. Every button has a default function, and/or a context determined function. The currently selected channel and mode determines the context for each selector. Alternatively, the currently active display may determine the context for each selector. For example, a display screen (e.g., a help screen) may be superimposed on the main display such that the display screen becomes the active context. The electronic device (300) is context sensitive in that the function that is associated with each selector may change based on the selected channel and mode or display screen.

A first one of the selectors, button "a" (330) has a primary (or default) function of up, page up, or previous page in the currently selected channel. The first selector, button "a" (330), also has an alternate function that is defined within the context of the currently selected channel and mode or display. For example, when a timer function (e.g., a countdown timer or stop watch timer) is active on the display, the first selector may be configured to start/stop the timer. In the list display mode, the electronic device will display a list of available messages or content that is associated with a particular channel. The time channel may include a main time screen, a chronograph screen, an alarm screen, and a timer screen. When the currently selected channel is the time channel, the first selector may be activated to set the time, start the chronograph, set the timer, or set the alarm on the electronic device. The setting of the time/timer/alarm is accomplished by activating the first selector for a predetermined time period. For example, when the selector is a button as shown in FIGURE 3, the button is held for a timeout interval such as two to five seconds before the setting function is activated. The timeout interval may be different for every button and/or the same button depending upon the context of the currently active channel, mode, and display.

A second one for the selectors, button "b" (330) has a primary (or default) function of down, page down, or next page in the currently selected channel. The second selector, button "b" (330), may also have an alternate function that is defined within the context of the currently selected channel and mode or display. For example, when a timer function (e.g., a countdown timer or stop watch timer) is active on the display, the second selector may be configured to reset the timer. In another example, the second selector is activated for a predetermined time interval (e.g., two seconds) to select "delete" function in a particular channel. In another example, the second selector is activated for a predetermined time interval to select a "list browse" function in a particular channel. In still another example, the functionality of the first and second selectors is combined into a single input mechanism.

A third one of the selectors, button "c" (330) has a primary (or default) function of select mode or channel. The third selector, button "c" (330), may also have an alternate function that is defined within the context of the currently selected channel and mode or display. In one example, the third selector is activated for a predetermined time interval (e.g., two seconds) to select the main channel. The main channel in a watch device is a watch face. An alternate location for the "c" button (332) corresponds to the bottom center of the watch bezel, as shown in FIGURE 3. In one example, the third selector is a "dial" or "disc" type selector such as a wheel.

A fourth one of the selectors, button "d" (330) has a primary (or default) function of "enter". The "enter" function is context sensitive and used to activate the enter function that is associated with a selected channel, or to select a next item from a selection list that is currently active. In one example, the fourth selector (or enter function) is associated with a "select mode" function when a mode splash screen is active. In another example, the fourth selector (or enter function) is associated with a "select channel" function when a channel splash screen is active. In still another example, the fourth selector (or enter function) is associated with a "enter detailed view" function when a channel view is active for a messages channel. Activation of the fourth or "d" selector activates the context specific "enter" function such as entering the detailed view associated with the currently selected message.

The fourth selector, button "d" (330), may also have an alternate function that is defined within the context of the currently selected channel and mode or display. For example, the fourth selector is activated for a predetermined time interval (e.g., two seconds) to gradually erase items on the display. In this example, additional items in the display region are erased while the erase function is active (e.g., maintaining button "d" as depressed), and the erase function is deactivated when the fourth selector is deactivated (e.g., by releasing button "d").

The four selectors are arranged such that the electronic device accomplishes navigating and selecting content on each channel in a simple manner. An optional fifth selector (e.g., button "e", 334) may be arranged to provide other functions such as backlighting or another desired function.

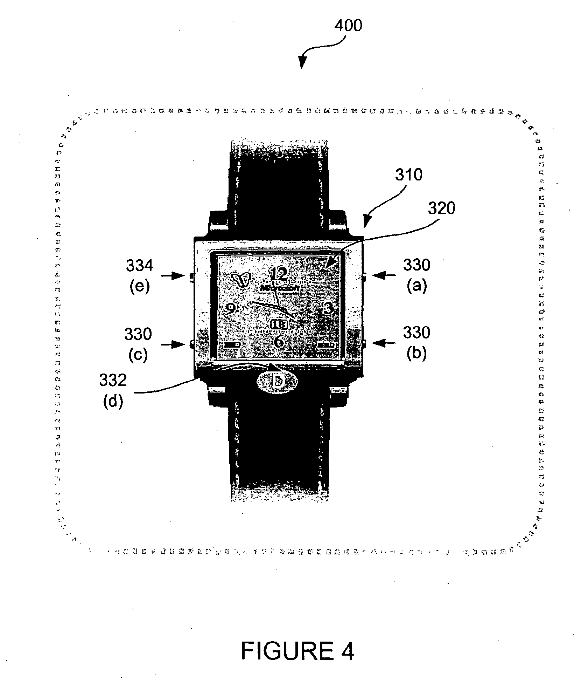

FIGURE 4 illustrates another example watch device (400) that includes a user interface to an electronic system that is configured to operate in accordance with the interaction model. The watch device (400) is arranged in a substantially similar manner as that discussed with respect to FIGURE 3. However, the location of the fourth selector (e.g., button "d") is located about the lower center portion of the bezel (location of selector 332). The operation of the selectors in FIGURE three are identical to that described with respect to FIGURE 3.

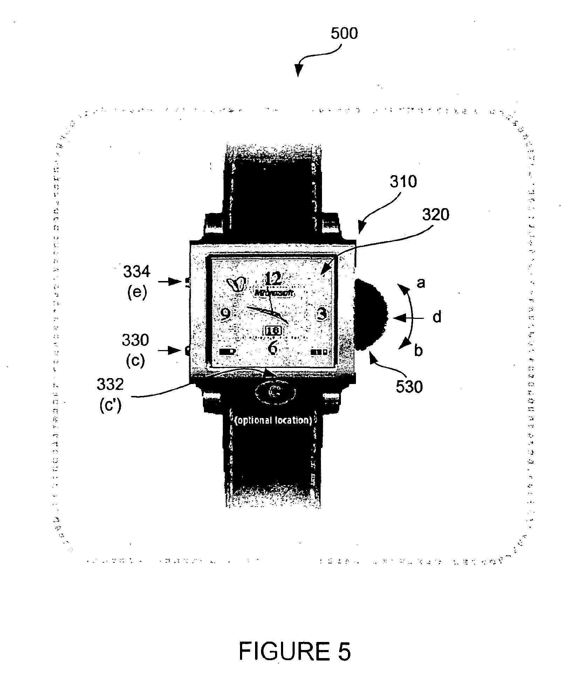

FIGURE 5 illustrates another example watch device (500) that includes a user interface to an electronic system that is configured to operate in accordance with the interaction model. The watch device (500) is arranged in a substantially similar manner as that discussed with respect to FIGURE 3. However, the first, second, and third selectors (e.g., buttons "a", "b", and "d") are replaced with a wheel type of device (530). The functions of the "a" and "b" selectors are activated by rotating the wheel device (530) in a counterclockwise and clockwise manner. The functions of the "d" selector are activated by pressing the wheel device (530) towards the watch bezel.

In an alternative example, the "a" and "b" button-type selectors are replaced by a rocker-type of switch that may be depressed toward the locations of the "a" and "b" selectors illustrated in FIGURES 3 and 4. In still another example, a touch screen interface is employed as the selectors for the watch device. Other examples of selector mechanisms may be employed. In another alternative example, one or more of the selectors are eliminated such that fewer physical selector means are required (e.g., elimination of a particular function, or multiple functions are provided by a single selector means).

In one example, the "a" selector is eliminated such that only the "b" selector can be used to navigate in a single direction (e.g., down). After the last item or page is viewed, depressing the "b" selector an additional time can wrap around to the first item or page. In another example, multiple functions can be tied to a single selector using a timeout sequence such that fewer physical selectors can be used to affect the same functionality. The depression of the "c" selector may perform an "enter" function when depressed for a short time interval (e.g., 1 second), a "navigate to mode splash" function when depressed for a medium time interval (e.g., 2 seconds), a "navigate to channel splash screen" function when depressed for a long time interval (e.g., 3 seconds), and a "navigate home" function when depressed for a longer time interval (e.g., 4 seconds).

### Process Flow

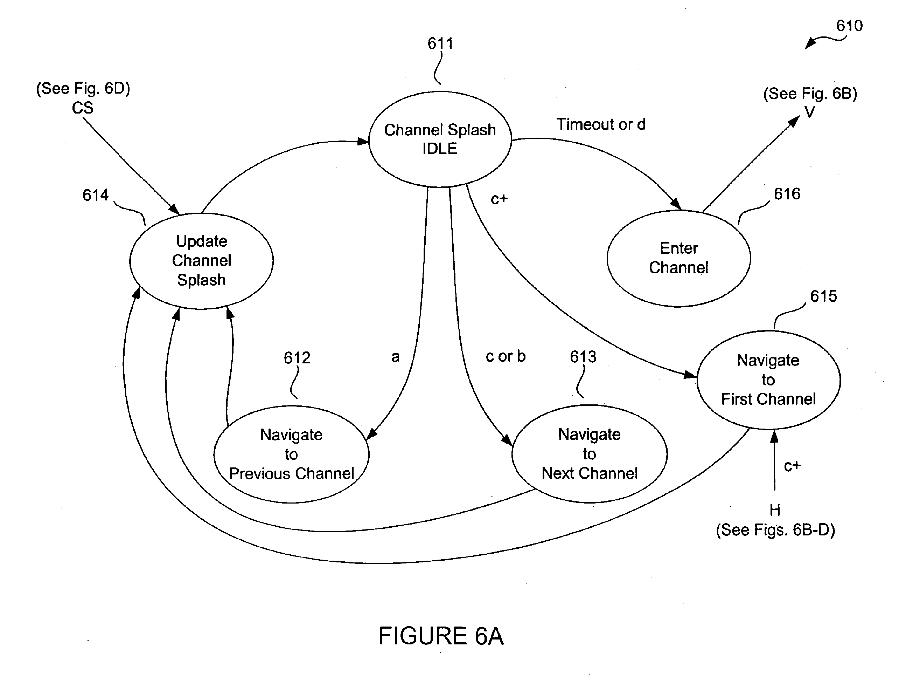

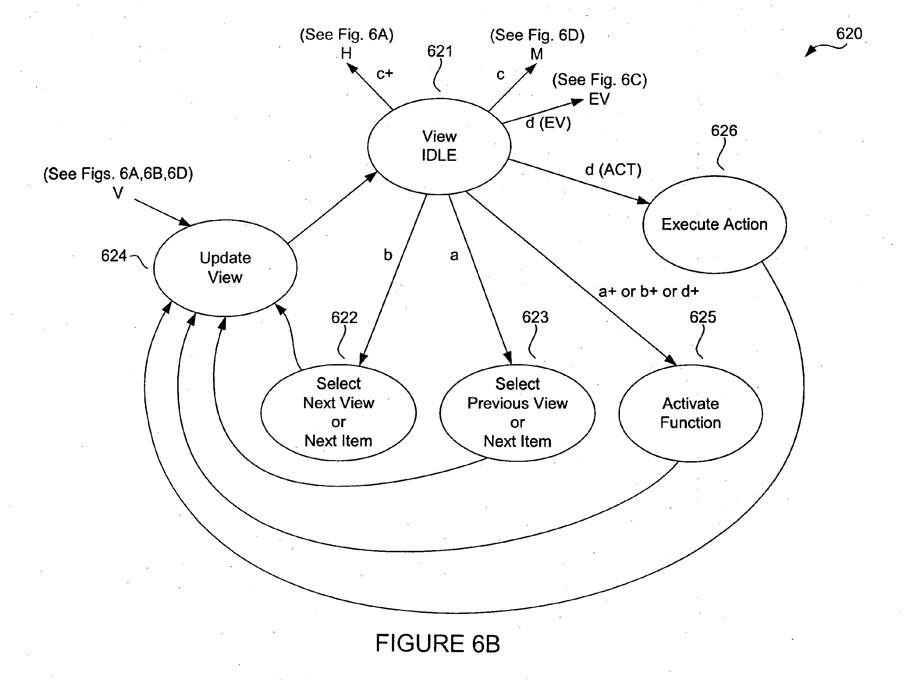

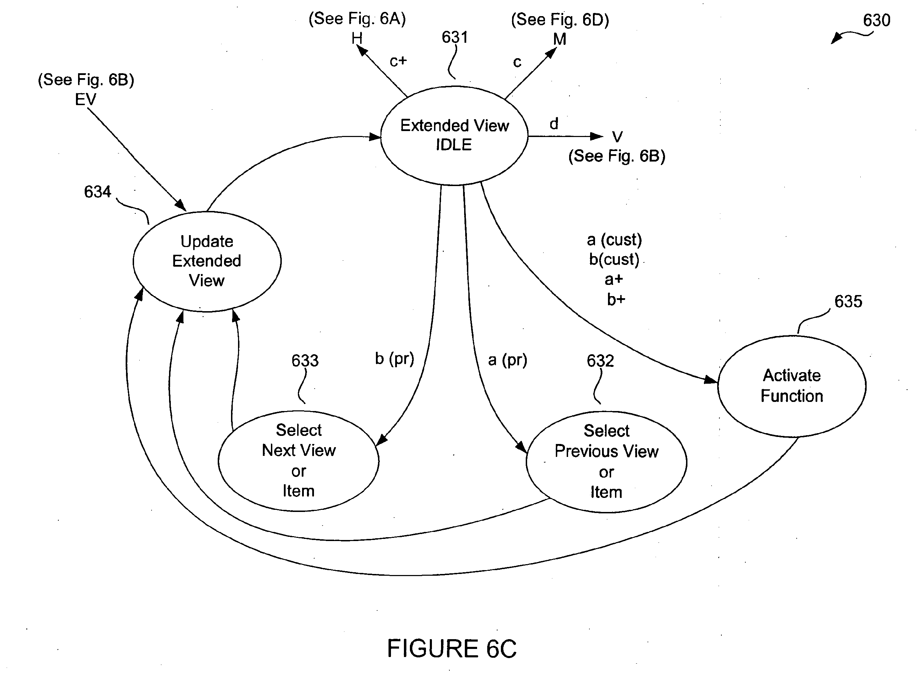

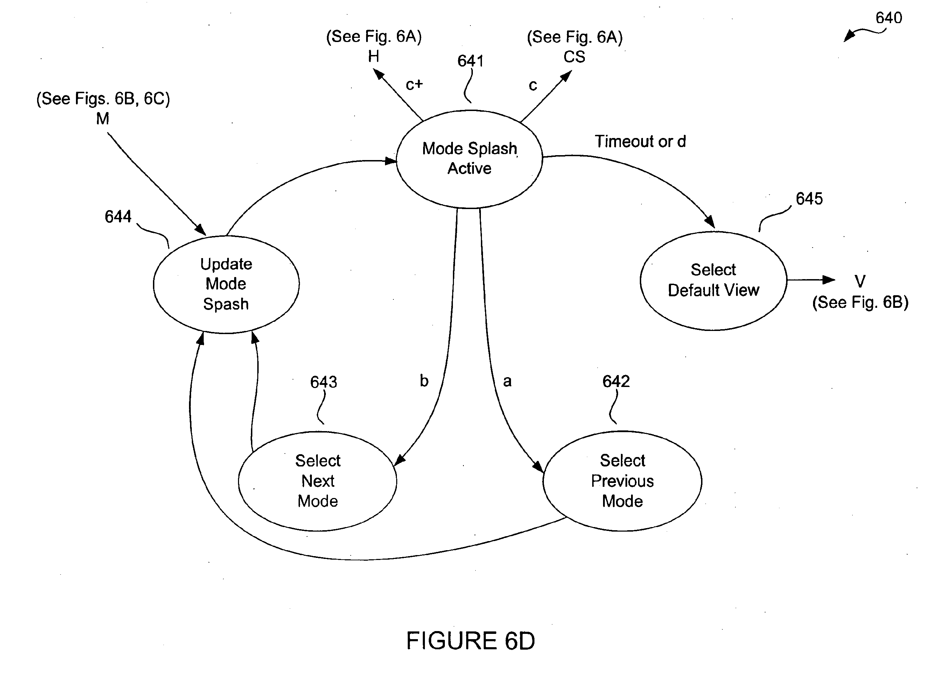

Process flow diagrams for navigation function of an example electronic device are illustrated in FIGURES 6A - 6D. The process flow diagram illustrated in FIGURE 6A is predominately focused on channel splash activity. The process flow diagram illustrated in FIGURE 6B is predominately focused on view activity. The process flow diagram illustrated in FIGURE 6C is predominately focused on extended view activity. The process flow diagram illustrated in FIGURE 6D is predominately focused on mode splash activity.

Every electronic device may have at least one channel that corresponds to the home channel. For a watch type of device, the home channel illustratively corresponds to a time channel. However, different home channels can be assigned to every electronic device. In the event that a device has only one channel, the one channel corresponds to the home channel. Whenever the currently selected channel corresponds to the home channel, the previous channel corresponds to the last channel (if more than one channel exists on the device). Similarly, the next channel corresponds to the home channel when the current channel is the last channel in the channel list for the electronic device.

Every electronic device has a set of selectors (e.g., buttons) that are selectively activated to navigate various functions in the device. Example selectors are illustrated in FIGURES 3 through 5. For the purposes of the discussion below, each selector is indicated by a letter such as "a", "b", "c", "d", and "e". Some alternate selector functions may be chosen by sustained activation of a selector button for a predetermined time interval (e.g., two seconds). These alternate selector functions are generally indicated by a "+" symbol adjacent to the selector functions' designating letter (e.g., "c+").

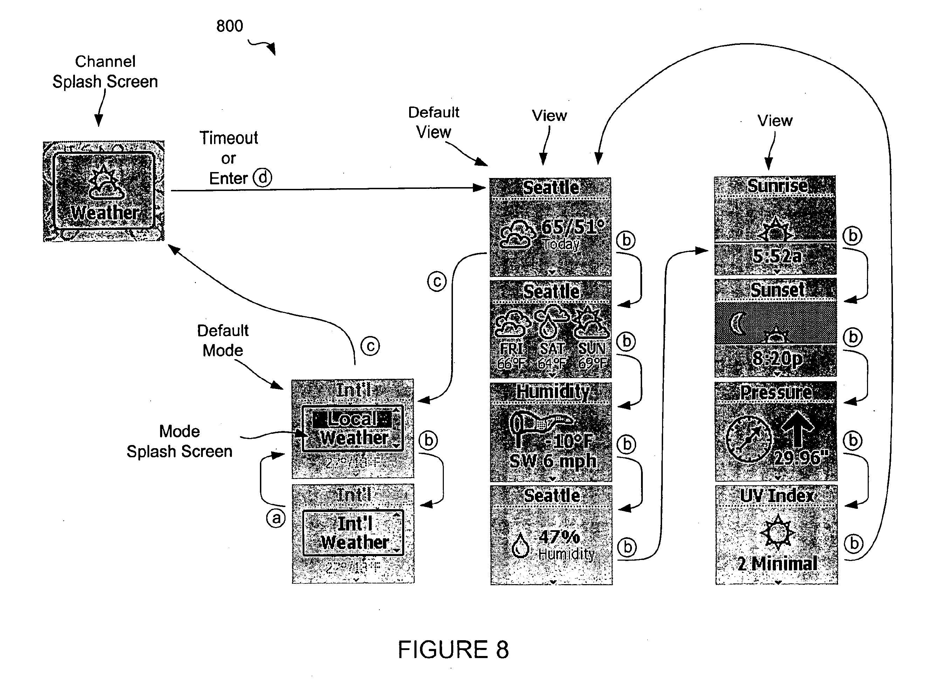

The example electronic device described below includes four selector functions as indicated by letters "a", "b", "c", and "d". The "e" selector may be arranged to provide additional functions such as backlighting, a back channel selector, as well as any other desired function. Additional extended functions may also be accessible through multiple selector combinations. For example, holding the "d" and "a" selectors together ("d+" & "a+") for a predetermined time interval can be done to select special settings in the electronic device such as a "screen adjust" function. An example extended function is illustrated in FIGURE 8. Additional extended functions can also be accomplished using other selector combinations such as "d+" & "b+", "a+" & "b+", as well as others.

The term "activate" refers to the activation of the function associated with the corresponding letter. The functions associated with each selector letter (e.g., "a", "b", "c", and "d") may be implemented with fewer physical selectors as described previously with respect to FIGURES 3-5. In one example, activation is accomplished by depression of a button. In another example, activation is accomplished by depressing a button (or other selector means) for a predetermined time interval. In still another example, activation is accomplished by rotating a wheel or rocket type means.

### Channel Splash Operating State

The channel splash operating state is described as follows below with reference to FIGURE 6A.

The electronic device activates the channel splash operating state when the electronic device is initialized (e.g., just after a power-up sequence). The electronic device has a default initial channel that is referred to as a home channel. The display is updated to indicate the currently selected channel at block 614. Processing continues to block 611 where the channel splash operating state is maintained in an idle state. The electronic system in the electronic device monitors the user interface (e.g., the four selector) while in the channel splash IDLE state. When the user activates one or more of the selectors (e.g., one of four selectors), processing leaves the channel splash IDLE state.

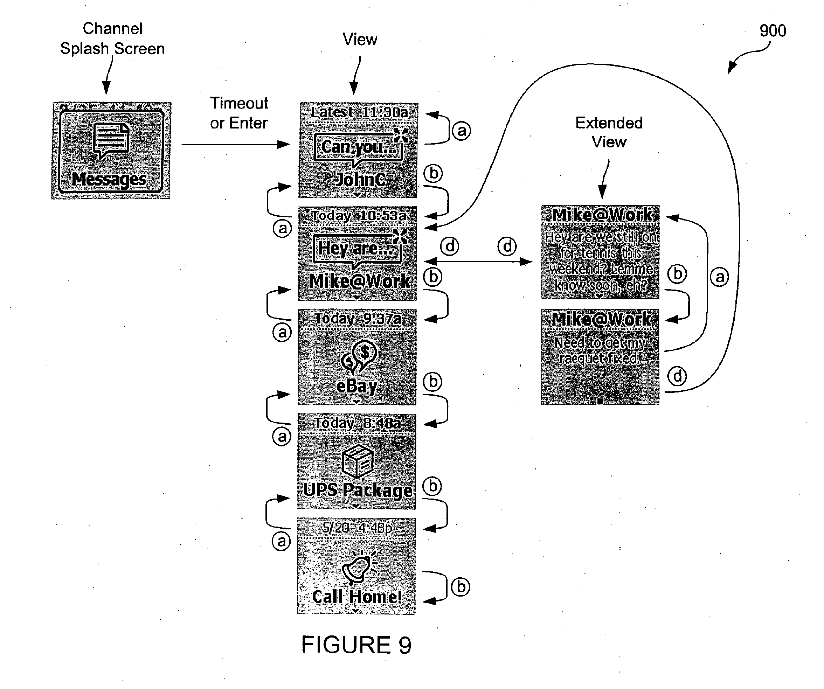

The display actively maintains the splash screen to indicate the current channel selection while the channel splash IDLE state is active at block 611. Splash screens may include one or more graphic elements and/or text elements. Example splash screens are illustrated in FIGURES 8 and 9. Splash screens may be accompanied by the activation of sound that provides an audible indicator that the channel has changed. The sound associated with the audible indicators may be the same for each channel splash screen, or unique based on either the particular channel or the particular channel type (e.g., news channels are one type, while messages are another type).

Processing flows from the channel splash IDLE state (611) to the "navigate up" or "navigate to previous channel" function (612) when the "a" selector is activated (e.g., depressing an "a" button). Processing continues from block 612 to block 614, where the display is updated based on the newly selected channel. After the display is updated, processing returns to the channel splash IDLE state (611).

Processing flows from the channel splash IDLE state (611) to the "navigate down" or "navigate to next channel" function (613) when either the "b" selector or the "c" selector is activated (e.g., depressing either the "b" or "c" button). Processing continues from block 613 to block 614, where the display is updated based on the newly selected channel. After the display is updated, processing again returns to the channel splash IDLE state (611). See FIGURES 8 and 9 for example channel splash screens.

Processing flows from the channel splash IDLE state (611) to the "navigate to first channel" or "navigate to home channel" function (615) when the "c+" selector is activated. The home channel navigation function can be accessed from any channel or channel view of the electronic device. The electronic device navigates to the home channel (e.g., the time channel on a watch device) when the "navigate to home channel" function is activated. Processing continues from block 613 to block 614, where the display is updated based on the newly selected channel (i.e., the home channel). After the display is updated, processing again returns to the channel splash IDLE state (611).

Processing flows from the channel splash IDLE state (611) to the "enter channel" function (616) when the "d" selector is activated (e.g., depressing a "d" button). Alternatively, the "enter channel" function is activated when the electronic system is maintained in the channel splash IDLE state for a predetermined time interval (e.g., 2 seconds) without activation of a selector. Processing flows from block 616 to block 624 (see FIGURE 6B) when the "enter channel" function is activated as indicated by "V".

The enter channel function performs a series of initializations in the electronic device prior to leaving the channel splash operating state and entering the channel view operating state. Every channel in the electronic device has at least one operating mode. The electronic device selects the current operating mode as a default mode, and a current view as a default view in the currently selected channel when the "enter channel" function is activated.

In one example, a weather channel has a local weather operating mode, a national weather operating mode, and an international weather operating mode. A series of views is associated with each operating mode. For example, a local weather channel may have a view that includes content indicating the current temperature in Seattle, while a national weather channel may have a view that includes content indicating the temperatures across a region.

### Channel View Operating State

The channel view operating state is described as follows below with reference to FIGURE 6B.

The electronic device enters the channel view operating state at entry point V, where the selector functions associated with the currently selected channel and operating mode are mapped to the selectors. The display is updated to indicate the currently selected view at block 624. Processing continues to block 621 where the channel view operating state is maintained in an IDLE state. The electronic system in the electronic device monitors the user interface (e.g., the four selector) while in the view IDLE state. When the user activates one or more of the four selectors, processing leaves the view IDLE state.

The display actively maintains the current view while the view IDLE state is active at block 621. List type views include lists of items that can be selected. Other types of views are simply graphical and/or textual elements that are arranged in a display view. Example views are illustrated in FIGURES 9 and 10. Views may be accompanied by the activation of sound that provides an audible indicator that the view has changed. The sound associated with the audible indicators may be the same for each view (e.g., a beep type of indicator or sound clip), or unique based on the particular view. In one example, an audible indicator is activated when a particular alert notification function is activated.

Processing flows from the view IDLE state (621) to the "previous view" or "previous item" function (622) when the "a" selector is activated (e.g., depressing an "a" button). Processing continues from block 622 to block 624, where the display is updated based on the newly selected view. After the display is updated, processing returns to the view IDLE state (621). In one example, the previous view corresponds to the last view when the currently selected view is the first available view in the current mode for the current channel. In another example, the previous view corresponds to a null when the currently selected view is the first available view in the current mode for the current channel. In still another example, the previous item in a list is highlighted when the "a" selector is activated.

Processing flows from the view IDLE state (621) to the "next view" or "next item " function (613) when the "b" selector is activated (e.g., depressing the "b" button). Processing continues from block 623 to block 624, where the display is updated based on the newly selected view. After the display is updated, processing again returns to the view IDLE state (621). In one example, the next view corresponds to the first view when the currently selected view is the last available view in the current mode for the current channel. In another example, the next view corresponds to a null when the currently selected view is the last available view in the current mode for the current channel. In still another example, the next item in a list is highlighted when the "b" selector is activated.

Processing flows from the view IDLE state (621) to the "mode splash" function when the "c" selector is activated as indicated by "M". Refer to FIGURE 6D and related discussion for details.

Processing flows from the view IDLE state (621) to the select home channel splash function when the "c+" selector is activated as indicated by "H". Refer to FIGURE 6A and related discussion for details.

The "d" selector is defined within the context of the current channel, mode, and view. The "d" selector may be defined as an "enter extended view" function, a "select" function, or a "execute action" function. Not every view in a given channel/mode has an extended view as may be indicated by a null value. Some views may have an action function that is defined within the context of the view in the currently selected mode/channel. The context for each view is assigned to the mode upon entry into the mode for the current channel.

Processing flows from the view IDLE state (621) to the "enter extended view" function when the "d" selector is activated (e.g., depressing a "d" button when the help screen is inactive) and the extended view is available as indicated by "d(EV)". The extended view is available when defined within the context of the currently selected view. For example, the extended view may be available when a particular news headline is displayed for a news channel. Activation of the "d" selector accesses the extended view, which includes a detailed news story that is associated with the particular news headline. Refer to FIGURE 6C and related discussion for details on the extended view processing.

Processing flows from the view IDLE state (621) to the "execute action" function at block 626 when the "d" selector is activated and the action function is available as indicated by "d(ACT)". The action function is defined within the context of the currently selected view. For example, a fortune cookie mode may be available in an entertainment channel. Although the fortune cookie mode may only have a single view, the "d" selector may be mapped to an action function that randomly selects fortunes from a list when the "d" selector is activated. After the action is performed (e.g., retrieve random fortune from list, execute an animation sequence), processing continues to block 624 where the display is updated as previously described.

Other special functions may be mapped to the "a+", "b+", and "d+" selectors within the context of the current view. By activating the corresponding selector for a predetermined time interval (e.g., 2 seconds) the corresponding special function is activated as indicated by block 625. Processing continues from block 625 to block 624 where the display is updated as previously described.

In one example, a list browser function is available in a view that corresponds to a specific contact in an address book. For this example, activation of the "a" and "b" selectors manually navigates through other views that correspond to additional contacts in the address book, one at a time. Activation of the "a+" or "b+" selector may activate an index function that displays an index indicator such as "A", "B", "C", etc. After the index function is active, the "a" and "b" are mapped into scroll up and down functions, "c" is mapped to a cancel function, and "d" is mapped to a select current index function. For example, a contact in the "Z" section of the address book can be accessed by selecting the "M" index without traversing through numerous contacts in the address book in sequence. The indexing system can be any type of indexing system as defined within the scope of the current view. For example, the indexing is done according to letters such as "A", "B", "C", etc. when the list is arranged in alphabetical order, the indexing is done according to dates when the list is arranged in chronological order.

In another example, an erase function is available in a view that corresponds to a specific instant message in a messages channel. For this example, activation of the "a" and "b" selectors manually navigates through various messages one at a time. Activation of the "d+" selector may activate an erase function that removes the current instant message from the electronic device.

### Extended Operating State

The extended view operating state is described as follows below with reference to FIGURE 6C.

The electronic device enters the extended view operating state at entry point EV, where the selector functions associated with the currently selected extended view are mapped to the selectors. The display is updated to indicate the currently selected extended view at block 634. Processing continues to block 631 where the extended view operating state is maintained in an IDLE state. The electronic system in the electronic device monitors the user interface (e.g., the four selector) while in the extended view IDLE state. When the user activates one or more of the four selectors, processing leaves the extended view IDLE state.

The display actively maintains the current extended view while the extended view IDLE state is active at block 631. Extended views include graphical and/or textual elements that are arranged in a display view. Example extended views are illustrated in FIGURE 9.

Processing flows from the extended view IDLE state (631) to the "previous view" or "previous item" function (632) when the "a" selector is activated (e.g., depressing an "a" button). Processing continues from block 632 to block 634, where the display is updated based on the newly selected extended view. After the display is updated, processing returns to the extended view IDLE state (631). In one example, the previous view corresponds to the last extended view when the currently selected extended view is the first available extended view for the current channel/mode. In another example, the previous extended view corresponds to a null when the currently selected extended view is the first available extended view in the current channel/mode.

Processing flows from the extended view IDLE state (631) to the "next view" or "next item" function (633) when the "b" selector is activated (e.g., depressing an "b" button). Processing continues from block 633 to block 634, where the display is updated based on the newly selected extended view. After the display is updated, processing returns to the extended view IDLE state (631). In one example, the next view corresponds to the first extended view when the currently selected extended view is the last available extended view for the current channel/mode. In another example, the next extended view corresponds to a null when the currently selected extended view is the last available extended view in the current channel/mode.

Processing flows from the extended view IDLE state (631) to the "mode splash" function when the "c" selector is activated as indicated by "M". Refer to FIGURE 6D and related discussion for details.

Processing flows from the extended view IDLE state (631) to the view function when the "d" selector is activated as indicated by "V". Refer to FIGURE 6B and related discussion for details.

Processing flows from the extended view IDLE state (631) to the select home channel splash function when the "c+" selector is activated as indicated by "H". Refer to FIGURE 6A and related discussion for details.

Special functions may be mapped to the "a"', "b", "a+", and "b+" selectors within the context of the current view. By activating the corresponding selector for a predetermined time interval (e.g., 2 seconds) the corresponding special function is activated as indicated by block 635. Processing continues from block 635 to block 634 where the display is updated as previously described.

### Mode Splash Operating State

The model splash operating state is described as follows below with reference to FIGURE 6D.

The electronic device enters the mode splash operating state at entry point M. The display is updated to indicate the currently selected mode at block 645. Processing continues to block 641 where the mode splash operating state is maintained in an IDLE state. The electronic system in the electronic device monitors the user interface (e.g., the four selector) while in the mode splash IDLE state. When the user activates one or more of the four selectors, processing leaves the mode splash IDLE state.

The display actively maintains the current mode splash display while the mode splash view IDLE state is active at block 641. Mode splash views include graphical and/or textual elements that are arranged in a display view. Example mode splash displays are illustrated in FIGURE 8. Mode splash displays may be accompanied by the activation of sound that provides an audible indicator that the selected mode has changed. The sound associated with the audible indicators may be the same for each mode splash (e.g., a beep type of indicator or sound clip), or unique based on the particular mode selected.

Processing flows from the mode splash IDLE state (641) to the "previous mode" function (642) when the "a" selector is activated (e.g., depressing an "a" button). Processing continues from block 642 to block 644, where the display is updated based on the newly selected mode. After the display is updated, processing returns to the mode splash IDLE state (641). In one example, the previous mode corresponds to the last mode when the currently selected mode is the first available mode for the current channel.

Processing flows from the mode splash IDLE state (641) to the "next mode" function (643) when the "b" selector is activated (e.g., depressing an "b" button). Processing continues from block 643 to block 644, where the display is updated based on the newly selected mode. After the display is updated, processing returns to the mode splash IDLE state (641). In one example, the next mode corresponds to the first mode when the currently selected mode is the last available mode for the current channel.

Processing flows from the extended view IDLE state (641) to the "channel splash" function when the "c" selector is activated as indicated by "CS". Refer to FIGURE 6A and related discussion for details.

Processing flows from the mode splash IDLE state (641) to the "select default view" function (645) when the "d" selector is activated or a timeout occurs after a predetermined interval (e.g., 2 seconds). Processing continues from block 645 to the channel view operating state as indicated by "V". Refer to FIGURE 6B and related discussion for details.

Processing flows from the mode splash IDLE state (641) to the select home channel splash function when the "c+" selector is activated as indicated by "H". Refer to FIGURE 6A and related discussion for details.

### Example Channel Navigation

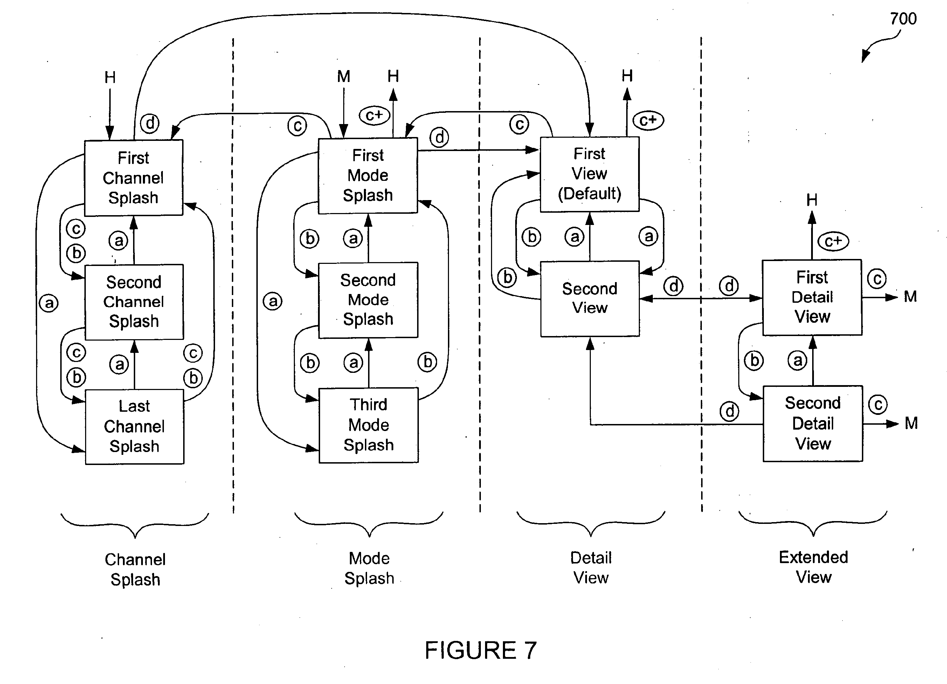

FIGURE 7 is a diagram that illustrates navigation functions for an example electronic device. Each channel has a corresponding channel splash screen, and at least one mode. Each mode includes display views. As shown in the figures, the first channel includes a channel splash, and three modes. Also shown in the drawing, two views are available for the first mode, and two extended views are available for the second view.

Although three channels are illustrated in FIGURE 7, the electronic device may be arranged to select and display any number of channels. Although every channel has at least one mode, modes for the second and third channels are not shown in the drawing.

Example navigation functions are illustrated in FIGURE 7 according to the "a", "b", "c", and "d" selectors as previously described. Additional navigation functions may also be included in addition to those shown in the figure.

Navigation through the channels is accomplished by activation of the "c" selector when the channel splash is active. For example, a user can navigate from the first channel to the second, and third (last) channels by repeatedly activating the "c" selector. Alternatively, the user can navigate through the channels by activation of the "a" and "b" selectors while the channel splash is active. Activating the "c" or "b" selector on the last channel navigates the user back to the first channel. Activating the "a" selector on the first channel navigates the user to the last channel.

Entering a selected channel is accomplished by activation of the "d" selector or by a timeout without any interaction. For example, a user can navigate from the first channel splash, to the first (default) view in the first (default) mode by activating the "d" selector. After the channel is entered, navigation through the various views is accomplished by the "a" and "b" selectors, as shown. Activating the "c" selector in any of the views will navigate the user back to a mode splash screen. Activation of the "c+" selector from any view will navigate the user back to the first (home) channel, and display the mode splash screen again.

Entering an extended view is accomplished by activation of the "d" selector in a view that has an extended view available. For example, the first view illustrated in FIGURE 7 does not have any extended views, while the second view has two extended views available. Activation of "d" in the first view results in no change, while activation of "d" in the second view enters the extended view mode. From the extended view mode, navigation through the extended views is accomplished by the "a" and "b" selectors, as shown. Activating the "d" selector in any of the extended views will navigate the user back to the view display. Activation of the "c" selector in any of the extended views will once again activate the mode selection splash screen. Also, activation of the "c+" selector from any extended view will navigate the user back to the first (home) channel.

FIGURE 8 is an illustration (800) of various screens for channel navigation functions for a weather channel. A channel splash screen is displayed when the weather channel is initially selected, as previously described. After the splash screen is dismissed (either through the expiration of a timeout interval or by through user interaction with the "d" selector) a default view for the weather channel is displayed (e.g., current temp in Seattle).

The weather channel may include a number of modes depending upon the configuration of the channel. The example illustrated in FIGURE 8 includes a local weather mode, and an international weather mode. Navigation between modes in the current channel (in this example the weather channel) is accomplished by activation of the "a" and "b" selectors after enabling the mode splash as previously described. Channel views for the current mode are accessed by activating the "a" and "b" selectors once the channel view is accessed (e.g., after selecting the channel, or mode). Example views for a weather channel may include: current temperature, multi-day forecast, wind, humidity, time for sunrise, time for sunset, barometric pressure, and UV index. Navigation through the views is accomplished by activation of the "a" or "b" selectors, as previously described. Activation of "b" selector on the last view cycles the view back to the first view, as illustrated in FIGURE 8.

The weather channel may be configured to have more than one mode, where each mode corresponds to a particular weather channel (e.g., local weather, national weather, international weather, etc.). Each mode has a special splash screen to give a visual (and optionally an audible) cue that indicates a change in the current mode. For example, a "National Weather" splash screen may be activated when the main view navigates to the national weather mode for the weather channel. After the splash screen is dismissed (e.g., a timeout or a user interaction dismisses the splash screen), one of the detail views for the national weather is immediately displayed. Alternatively, the splash screen is dismissed by depressing either the "c" selector or the "c+" selector, navigating back to the channel selection splash screens as previously described.

FIGURE 9 is an illustration (900) of various screens for channel navigation functions for a messages channel. A channel splash screen is displayed when the messages channel is initially selected, as previously described. After the splash screen is dismissed (either through the expiration of a timeout interval or by through user interaction) a default view (e.g., most recent message) for the messages channel is displayed.

The messages channel may include a number of views that each corresponds to a different message. The example illustrated in FIGURE 9 includes a text message (e.g., from John C), another text message (e.g., from Mike@Work), a message concerning an auction (e.g., from ebay), a notification from a courier (e.g., UPS), and an alert message (e.g., call home). Navigation between views in the current channel (in this example, the messages channel) is accomplished by activation of the "a" and "b" selectors as previously described. Some messages may include further details in an extended view that can be accessed by activating the "d" selector. Example extended views for one of the messages (e.g., from Mike@Work) are illustrated in FIGURE 9. Navigation through the extended views is accomplished by activation of the "a" and "b" selectors, as previously described. Activation of the "d" selector from any of the extended views navigates back to the view display. Activation of "b" selector on the last view, or "a" on the first view, does not cycle to another view, as illustrated in FIGURE 9.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A method for navigating on a device that includes a display and a user interface selection device, comprising:
identifying a current channel in the device, wherein each channel in the device includes stored content that is associated with the channels;
changing the current channel to another channel in response to a first selector;
changing the current channel to a home channel in response to a second selector; and
mapping selectors from the user interface device to functions that are associated with the current channel such that the selectors are context sensitive with respect to the currently selected channel.

2. A method for navigating of Claim 1, wherein the first and second selectors correspond to separate physical selector means.

3. A method for navigating of Claim 1, wherein the first selector and the second selector corresponds to a single physical selector means, wherein the first selector is activated when the physical selector means is active for a first predetermined time interval, and the second selector is activated when the physical selector means is active for a second predetermined time interval.

4. A method for navigating on a device that includes a display and a user interface selection device, comprising:
identifying a current channel in the device, wherein each channel in the device includes stored content that is associated with the channels;
mapping selectors from the user interface device to channel changing functions when the device is in a first operating state;
changing the current channel to a previous channel in response to a first of the selectors when the device is in the first operating state and additional channels are available;
changing the current channel to a next channel in response to a second of the selectors when the device is in the first operating state and additional channels are available;
activating a second operating state in response to at least one of the expiration of a predetermined time interval, and the activation of a fourth one of the selectors when the device is in the first operating state; and
updating the display to indicate content associated with the current channel when the second operating state is active.

5. The method for navigating of Claim 4, further comprising: changing the current channel to a next channel in response to a third of the selectors when the device is in the first operating state and additional channels are available.

6. The method for navigating of Claim 4, further comprising: updating the display to indicate the current channel selection when the first operating state is active.

7. The method for navigating of Claim 4, further comprising: activating a sound that provides an audible indicator when the current channel is changed in the first operating state, wherein the sound associated with each audible indicator is at least one of: the same for each channel, unique for each channel, and unique for each channel type.

8. The method for navigating of Claim 4,wherein each stored content corresponds to at least a portion of a communication that is stored on the device, wherein the content associated with each communication is organized according to communication channels.

9. The method for navigating of Claim 4, further comprising: activating the first operating state and changing the current channel to a home channel when a third selector is activated for a predetermined time interval.

10. The method for navigating of Claim 4, further comprising:
selecting a current view that is associated with the current channel when the device is in the second operating state;
mapping selectors from the user interface device to context specific functions that are associated with the current view when the device is in the second operating state; and
updating the display to indicate content that is associated with the current view when the device is in the second operating state.

11. The method for navigating of Claim 10, wherein activating the second operating state includes selecting a default mode and a default view for the current channel.

12. The method for navigating of Claim 10, further comprising:
activating the context specific functions in response to at least one selector when the device is in the second operating state, wherein the specified functions are associated with at least one of the current view, and a current mode that is associated with the current view.

13. The method for navigating of Claim 10, further comprising:
changing the current view to a previous view in response to a first of the selectors when the device is in the second operating state and additional channels are available; and
changing the current view to a next view in response to a second of the selectors when the device is in the second operating state and additional channel views are available.

14. The method for navigating of Claim 10, further comprising:
executing an action in response to the activation of the fourth one of the selectors when the device is in the second operating state and an action is available for the current view.

15. The method for navigating of Claim 10, further comprising activating a list browse function in response to an extended activation of one of the selectors when the device is in the second operating state, wherein the list browse function is arranged to display an index that is associated with content from the current view.

16. The method for navigating of Claim 10, further comprising:
activating a third operating state in response to the activation of the third one of the selectors when the device is in the second operating state.

17. The method for navigating of Claim 16, further comprising:
updating the display to indicate the current mode when the device is in the third operating state;
changing the current mode to a previous mode in response to a first of the selectors when the device is in the third operating state and additional modes are available; and
changing the current mode to a next mode in response to a second of the selectors when the device is in the third operating state and additional modes are available.

18. The method for navigating of Claim 16, further comprising:
activating the second operating state in response to at least one of the expiration of a predetermined time interval, and the activation of a fourth one of the selectors when the device is in the third operating state.

19. The method for navigating of Claim 16, further comprising:
activating the first operating state in response to the activation of the third one of the selectors when the device is in the third operating state.

20. The method for navigating of Claim 10, further comprising:
activating a fourth operating state in response to the activation of the fourth one of the selectors when the device is in the second operating state and an extended view is available for the current view.

21. The method for navigating of Claim 20, further comprising:
selecting an extended view that is associated with the current channel when the device is in the fourth operating state;
mapping selectors from the user interface device to context specific functions that are associated with the current extended view when the device is in the fourth operating state; and
updating the display to indicate content that is associated with the current extended view when the device is in the fourth operating state.

22. The method for navigating of Claim 20, further comprising:
activating the second operating state in response to the activation of the fourth one of the selectors when the device is in the fourth operating state.

23. The method for navigating of Claim 20, further comprising:
activating the third operating state in response to the activation of the third one of the selectors when the device is in the fourth operating state.

24. The method for navigating of Claim 20, further comprising:
activating the context specific functions for the current extended view in response to at least one selector when the device is in the fourth operating state, wherein the context specific functions are associated with the current extended view.

25. The method for navigating of Claim 4, further comprising: activating an extended navigation function in response to the simultaneous activation of at least two selectors.

26. An apparatus, comprising:
a display;
a user interface that includes selectors; and
an electronic system that is arranged to interact with the user interface and the display, wherein the electronic system is configured to:
identify a current operating state;
identify a current channel, wherein each channel is associated with stored content;
map selectors to context specific functions based on the identified operating state;
activate the context specific functions in response to at least one of the selectors when the context specific function is available for the identified operating state; and
display content that is associated with the current operating state.

27. The apparatus of Claim 26, wherein the context specific functions correspond to channel changing functions for a first operating state, view changing and selecting functions for the second operating state, mode changing functions for the third operating state, and extended view changing functions for the fourth operating state.

28. The apparatus of Claim 26, wherein the selectors include at least one of a selector button, a wheel-type device, and a rocker switch device.

29. A method for navigating on a device that includes a display and a user interface selection device, comprising:
identifying a current channel from a set of available channels, wherein the current channel includes stored content, and wherein the default channel corresponds to a time channel;
identifying a current operating state, wherein the current operating state corresponds to one of a first and a second operating state;
mapping context specific functions to selectors in the user interface selection device based on the current operating state;
entering the second operating state when the current operating state corresponds to the first operating state and a first condition is satisfied, wherein the first condition corresponds to at least one of a timeout condition expires and a fourth selector is activated;
entering the first operating state when the current operating state corresponds to the second operating state and a channel select function is activated;
executing a previous function in response to the activation of a first selector when the current operating state corresponds to the first operating state and additional channels or modes are available;
executing a next function in response to the activation of a second selector when the current operating state corresponds to the first operating state and additional channels or modes are available; and
displaying information on the display, wherein the information is associated with the current operating state and current channel.

30. The method for navigating of claim 29, wherein the first operating state corresponds to a channel splash, and the second operating state corresponds to a channel view.

31. The method for navigating of claim 29, further comprising: entering a third operating state when the current operating state corresponds to the second operating state and the third selector of the user interface selection device is activated.

32. The method for navigating of claim 29, further comprising: entering a fourth operating state when the current operating state corresponds to the second operating state and a second condition is satisfied, wherein the second condition is satisfied when the third selector of the user interface selection device is activated and an extended view is available for the current view.

33. The method for navigating of claim 29, further comprising: executing a navigate to home function when the third selector is activated for a predetermined time interval, wherein the home function is associated with a home channel on the device.

34. An apparatus, comprising:
a means for displaying that is arranged to display viewable information;
a user interface means that is arranged to activate selectors;
a processing means that is arranged to interact with the user interface and the means for displaying information, wherein the processing means includes:
a first means for identifying that is arranged to identify a current operating state;
a second means for identifying that is arranged to identify a current channel, wherein each channel is associated with stored content;
a means for mapping that is arranged to map selectors in the user interface means to context specific functions based on the identified operating state;
a means for activating that is arranged to activate the context specific functions in response to at least one of the means for selecting when the context specific function is available for the identified operating state; and
a means for updating that is arranged to update the viewable information to indicate content that is associated with the current operating state.

35. The apparatus of Claim 34, wherein the context specific functions correspond to channel changing functions for a first operating state, view changing and selecting functions for a second operating state, mode changing functions for a third operating state, and extended view changing functions for a fourth operating state.
